# EUROPÄISCHE PATENTSCHRIFT

(11) **EP 3 558 752 B1**
(45) Veröffentlichungstag und Bekanntmachung des Hinweises auf die Patenterteilung: **05.11.2025**
(21) Anmeldenummer: 17816656.7
(22) Anmeldetag: 08.12.2017
(51) Int. Cl.: B60R 11/00

(54) **KRAFTFAHRZEUG MIT EINEM BILDSCHIRM IN EINEM FAHRZEUGINNENRAUM**
MOTOR VEHICLE COMPRISING A SCREEN IN A PASSENGER COMPARTMENT
VÉHICULE AUTOMOBILE COMPRENANT UN ÉCRAN DANS UN HABITACLE DE VÉHICULE

(30) Priorität: 21.12.2016 DE 102016225745
(43) Veröffentlichungstag der Anmeldung: 30.10.2019
(73) Patentinhaber: Bayerische Motoren Werke Aktiengesellschaft, 80809 München (DE)
(72) Erfinder: HAUMAYR, Werner, 82061 Neuried (DE); KÜHN, Victor, 81679 München (DE); KASTNER-PUSCHL, Richard, 82166 Gräfeling (DE); STAUDACHER, Ulla, 81929 München (DE)
(86) Internationale Anmeldenummer: PCT/EP2017/081971
(87) Internationale Veröffentlichungsnummer: WO 2018/114385

(56) Entgegenhaltungen:
- EP-A1- 2 857 239
- WO-A1-98/39176
- WO-A2-2008/086109
- DE-C1- 10 226 406
- DE-T5- 112008 001 538
- DE-U1- 202016 100 609
- FR-A1- 2 967 941
- US-A1- 2012 055 966

## Beschreibung

Die vorliegende Erfindung bezieht sich auf ein ein Personenkraftfahrzeug mit einem Bildschirm, der in einem Fahrzeuginnenraum in einem Bereich einer Fahrzeugdachinnenseite angeordnet und befestigt ist.

Es ist bekannt, in einem Kraftfahrzeug ein Display einem Sitzplatz zugeordnet an einem Dach zu montieren. Eine derartige Display-Vorrichtung hat eine vergleichbar kleine Abmessung und hat ein übliches Bildverhältnis von beispielsweise 4:3 oder 16:9. Bei einem Personenkraftfahrzeug mit zwei Sitzplätzen auf einer Rücksitzbank sind entsprechend zwei derartige Display-Vorrichtungen erforderlich. Die Menge an darstellbaren Informationsinhalten und Unterhaltungsinhalten ist hierbei verhältnismäßig klein.

Aus der DE 11 2008 001 538 P5 ist beispielsweise eine derartige schließbare Display-Vorrichtung bekannt, die an einem Fahrzeugdach montierbar ist und zwischen einer Betriebsposition, d.h. einer heruntergeklappten Stellung, und einer Nicht-Betriebsposition, d.h. einer in Richtung des Fahrzeugdachs hochgeklappten Stellung, verschwenkbar ist.

Es ist die Aufgabe der vorliegenden Erfindung, ein Personenkraftfahrzeug mit einem verschwenkbaren Bildschirm in einem Fahrzeuginnenraum zu schaffen, der im Bereich einer Fahrzeugdachinnenseite angeordnet ist, der vielseitiger einsetzbar ist, der einem davor sitzenden Fahrzeuginsassen eine größere Anzahl an Informations- und Unterhaltungsinhalten wiedergeben bzw. darstellen kann und der im Fahrbetrieb des Kraftfahrzeugs in seiner Betriebsposition hinreichend stabil, wertig und sicher ist.

Diese Aufgabe wird durch ein Personenkraftfahrzeug mit einem Bildschirm gelöst, das die Merkmale von Patentanspruch 1 aufweist. Bevorzugte Weiterbildungen der Erfindung sind in den abhängigen Patentansprüchen aufgeführt.

Erfindungsgemäß hat ein Kraftfahrzeug einen Bildschirm, der in einem Fahrzeuginnenraum im Bereich einer Fahrzeugdachinnenseite angeordnet und befestigt ist. Der Bildschirm erstreckt sich durchgängig über zumindest die Hälfte, bevorzugt zumindest zwei Drittel der Breite, insbesondere im Wesentlichen einer gesamten Breite, der Fahrzeugdachinnenseite.

Bevorzugt erstreckt sich der Bildschirm in Breitenrichtung durchgängig zumindest von einer Mitte eines Fahrersitzplatzes zu einer Mitte eines Beifahrersitzplatzes, wobei der Bildschirm hinter dem Fahrersitzplatz und dem Beifahrersitzplatz angeordnet ist.

Ein Bildschirm kann auch als Display bezeichnet werden und ist eine Anzeigeeinrichtung, zur Anzeige von Informationsinhalten und/oder Unterhaltungsinhalten. Als "durchgängiger Bildschirm" ist ein Bildschirm bezeichnet, der nicht aus mehreren Teilen oder Abschnitten besteht, sondern der optisch eine Einheit bildet und ungeteilt ist. Eine Fahrzeugdachinnenseite erstreckt sich in eine Querrichtung üblicherweise von einem rechten Dachseitenrahmen zu einem linken Dachseitenrahmen. Die Fahrzeugdachinnenseite ist üblicherweise durch einen Dachhimmel oder auch vollständig oder zumindest teilweise durch ein Dachfenster ausgebildet. Der Fahrzeuginnenraum kann auch als Fahrgastzelle bezeichnet werden. Unter Kraftfahrzeug ist insbesondere ein Personenkraftfahrzeug zu verstehen, das bspw. zwei oder mehr Sitzreihen aufweist, wobei jede Sitzreihe üblicherweise zwei oder mehr Sitzplätze aufweist.

Durch die räumliche Ausdehnung des Bildschirms in Fahrzeugquerrichtung über zumindest die Hälfte der Breite der Fahrzeugdachinnenseite können sehr viele Inhalte auf dem Bildschirm für einen Fahrzeuginsassen oder auch nebeneinander sitzende Fahrzeuginsassen leicht lesbar bzw. erkennbar dargestellt werden.

Gemäß der vorliegenden Erfindung weist der Bildschirm eine maximale Höhe von 400 mm auf. Bevorzugt kann der Bildschirm ferner eine maximale Höhe von 300 mm aufweisen. Vorteilhaft hat der Bildschirm eine minimale Höhe von 100 mm oder eine minimale Höhe von 150 mm.

Durch eine verhältnismäßig geringe Höhe im Vergleich zur Breite des Bildschirms schränkt der Bildschirm das Sichtfeld des vor dem Bildschirm sitzenden Fahrzeuginsassen nach vorne verhältnismäßig wenig ein, sodass der Fahrzeuginsasse gleichzeitig ein Verkehrsgeschehen durch bspw. eine Frontscheibe des Kraftfahrzeugs sowie Inhalte auf dem Bildschirm betrachten kann. Ferner engt der Bildschirm durch die geringe Höhe ein Raumgefühl des Fahrzeuginsassen wenig ein und der Bildschirm stellt auch tatsächlich keine erhebliche Einschränkung des Fahrzeuginnenraums dar.

Bevorzugt weist der Bildschirm eine Breite von mindestens 500 mm oder mindestens 600 mm oder mindestens 700 mm oder mindestens 800 mm oder mindestens 900 mm oder mindestens 1.000 mm oder mindestens 1.100 mm oder mindestens 1.200 mm auf.

Somit können auf einem einzigen Bildschirm Inhalte für zwei vor dem Bildschirm nebeneinander sitzenden Fahrzeuginsassen dargestellt werden. Es entsteht für den Fahrzeuginsassen der Eindruck eines Panoramas.

Der Bildschirm kann auch derart ausgebildet sein, dass aus unterschiedlichen Blickwinkeln, beispielsweise von einem rechts sitzenden Fahrzeuginsassen (einer rechten Sitzposition) und einem links sitzenden Fahrzeuginsassen (einer linken Sitzposition) unterschiedliche Inhalte sichtbar sind, die gleichzeitig angezeigt werden.

Hierdurch können für verschiedene Sitzposition unterschiedliche Inhalte gleichzeitig über eine gesamte Breite des Bildschirms dargestellt werden.

Gemäß einer bevorzugten Weiterbildung ist der Bildschirm derartig positionierbar ausgeführt, dass in einem Blickfeld eines vor dem Bildschirm sitzenden Fahrzeuginsassen eine Unterkante des Bildschirms in etwa mit einem oberen Ende einer Frontscheibe fluchtet. Mit anderen Worten kann der Fahrzeuginsasse sowohl, von dem Bildschirm uneingeschränkt, ein Verkehrsgeschehen vor dem Kraftfahrzeug durch die Frontscheibe beobachten als auch oberhalb des oberen Endes der Frontscheibe Inhalte auf dem Bildschirm lesen und erkennen. Gegebenenfalls könnten hierbei auf dem Bildschirm eine Wiedergabe dessen (also der Umgebung) erfolgen, was durch das Fahrzeugdach verdeckt wird. Mit anderen Worten schränkt der nach unten geklappte Bildschirm die Sicht durch die Frontscheibe nicht ein, da ein Sichtstrahl zu der Unterkante des Bildschirms ungefähr mit dem oberen Ende der Frontscheibe fluchtet.

Erfindungsgemäß ist der Bildschirm um eine reelle oder virtuelle Schwenkachse, die in Fahrzeugquerrichtung, d.h. in eine Y-Richtung im Fahrzeugkoordinatensystem verläuft, schwenkbar gelagert. Die Schwenkachse kann ortsfest oder ortsveränderbar ausgebildet sein.

Hierbei kann der Bildschirm vorteilhaft in eine Dachstellung, in der der Bildschirm im Wesentlichen parallel zu der Fahrzeugdachinnenseite positioniert ist, schwenkbar sein.

Durch die Schwenkbarkeit kann der Bildschirm zum Einen in eine für den Fahrzeuginsassen günstige Position schwenkbar sein, in der der Insasse Inhalte auf dem Bildschirm besonders gut erkennen kann, und zum Anderen kann der Bildschirm vollständig in die Dachstellung geschwenkt werden, in der der Bildschirm den Fahrzeuginnenraum nicht beschränkt und das Sichtfeld für den Fahrzeuginsassen nach vorne durch den Bildschirm nicht eingeschränkt ist.

Erfindungsgemäß ist der Bildschirm über einen Eingelenkmechanismus oder über einen Mehrgelenkmechanismus, beispielsweise einen Viergelenkmechanismus, schwenkbar gelagert.

Bevorzugt kann der schwenkbare Bildschirm gekrümmt ausgebildet sein, wobei die Krümmung des Bildschirms in der Dachstellung im Wesentlichen einer Krümmung der Fahrzeugdachinnenseite entspricht.

Die Krümmung kann zum Einen zu einer besseren Lesbarkeit in einer heruntergeschwenkten Stellung des Bildschirms, d.h. einer Betriebsstellung, dienen und zum Anderen eine formschöne Anpassung des Bildschirms an die Fahrzeugdachinnenseite in seiner Dachstellung ermöglichen, wobei der Bildschirm möglichst nah an die Fahrzeugdachinnenseite geschwenkt werden kann und eine Kopffreiheit in der Dachstellung des Bildschirms möglichst wenig eingeschränkt ist.

Zusätzlich oder alternativ kann der Bildschirm in eine Fahrzeuglängsrichtung, d.h. in eine x-Richtung des Fahrzeugkoordinatensystems, verschiebbar gelagert sein.

Auch hierdurch ist der Bildschirm in eine für den Fahrzeuginsassen günstige Position verlagerbar, sodass der Fahrzeuginsasse Inhalte auf dem Bildschirm möglichst gut erkennen kann.

Ferner ist es auch möglich den Bildschirm in eine Stellung zu verlagern, in der der Bildschirm ggf. den Innenraum nicht einschränkt.

Darüber hinaus ist es auch möglich, den Bildschirm bspw. von einer Stellung vor einer hinteren Sitzreihe in eine Stellung vor einer vorderen Sitzreihe zu verlagern, sodass der Bildschirm für verschiedene hintereinander angeordnete Sitzreihen verwendbar ist.

Gemäß einer bevorzugten Weiterbildung ist der Bildschirm, insbesondere ausschließlich, an einem linken Dachseitenrahmen und an einem rechten Dachseitenrahmen befestigt und gelagert.

Hierdurch ist eine besonders dauerhafte und stabile Lagerung des Bildschirms möglich. Ferner kann hierdurch der Bildschirm durch die seitliche Lagerung und gegebenenfalls ohne weitere mittige Lagerung, d.h. heißt durch ausschließliche seitliche Lagerung, optisch einen formschönen freischwebenden Eindruck vermitteln.

Im Falle der Verschiebbarkeit des Bildschirms können an den Dachseitenrahmen Schienen, Kulissen oder dgl. ausgebildet bzw. befestigt sein, mittels derer der Bildschirm in Fahrzeuglängsrichtung verschiebbar gelagert ist.

Gemäß einer weiteren bevorzugten Weiterbildung der vorliegenden Erfindung ist der Bildschirm transparent, d.h. im Wesentlichen durchsichtig, ausgebildet.

Hierdurch schränkt der Bildschirm ein Sichtfeld des Fahrzeuginsassen nach vorne nicht ein, wobei gleichzeitig Inhalte in dieses Sichtfeld eingeblendet werden können. Ein derartiger transparenter Bildschirm ist bspw. mittels organischen Leuchtdioden, d.h. OLED, ausgebildet.

Mit organischen Leuchtdioden kann der Bildschirm verhältnismäßig dünn und auch transparent ausgebildet werden.

Bevorzugt ist der Bildschirm rahmenlos ausgebildet, wobei der Bildschirm eine formschöne Wirkung entfaltet und kein Rahmen das Sichtfeld des Fahrzeuginsassen einschränkt sowie eine Größe eines Anzeigebereichs des Bildschirms maximal ausgeführt sein kann.

Gemäß einer weiteren vorteilhaften Weiterbildung ist der Bildschirm in einem Fahrzeugfond angeordnet, d.h. vor einer hinteren Sitzreihe, also einer Sitzreihe, die keine vorderste Sitzreihe ist.

Erfindungsgemäss ist der Bildschirm derart verschwenkbar gelagert, dass seine Vorderseite - also die Seite, die in der Betriebsstellung dem davor sitzenden Fahrzeuginsassen, also den betrachtendem Fahrzeuginsassen, zugewandt ist - in der Dachstellung dem Fahrzeuginnenraum zugewandt ist.

Hierdurch sind auch in der Dachstellung Inhalte auf dem Bildschirm im Fahrzeuginnenraum sichtbar.

Weiterhin kann der Bildschirm derart ausgebildet sein, dass auf beiden Seiten des Bildschirms Inhalte darstellbar sind.

Mit anderen Worten weisen beide Seiten des Bildschirms, eine Vorderseite, die beispielsweise eine Hauptwiedergabeseite ist, und eine Hinterseite Anzeigebereiche (Wiedergabebereiche) auf. Dies ist insbesondere dann vorteilhaft, wenn der Bildschirm mit seiner Hauptwiedergabeseite, die der Fahrzeuginsasse im heruntergeschwenkten Zustand sieht, in Richtung der Fahrzeugdachinnenseite schwenkbar ist. In diesem Fall können in der Dachstellung weitere Inhalte dargestellt werden. Bei diesen Inhalten kann es sich bspw. auch lediglich um eine grafische Verschönerung der Fahrzeugdachinnenseite handeln. Der Bildschirm könnte auch zwischen zwei gegenüberliegenden Sitzreihen angeordnet sein, so dass Fahrzeuginsassen auf beiden Sitzreihen Inhalte sehen können.

Der Bildschirm kann ferner in der Dachstellung als Innenraumbeleuchtung ausgebildet sein. Hierbei können eine Beleuchtungsstärke sowie eine Farbe der Innenraumbeleuchtung einstellbar sein.

Weiterhin kann der Bildschirm derart ausgebildet sein, dass er in dem Fall, in dem er transparent ausgebildet ist, abdunkelbar ist und somit als Sonnenschutz oder dgl. dienen kann.

Ebenso kann der Bildschirm eine Spiegelfunktion beinhalten, die es ermöglicht, dass der Fahrzeuginsasse sich auf dem Bildschirm sieht. Die Spiegelfunktion kann mittels einer Kamera, deren Bild auf dem Bildschirm dargestellt ist, verwirklicht sein.

Erfindungsgemäß ist der Bildschirm eigensteif. Mit anderen Worten ist der Bildschirm in sich starr ausgebildet und im Gebrauch nicht biegsam. Sofern der Bildschirm schwenkbar gelagert ist, ist dieser als Ganzes schwenkbar. Beispielweise ist der Bildschirm damit nicht aufrollbar ausgebildet.

Vorstehende genannte Weiterbildungen und zusätzliche Merkmale der Erfindung können beliebig miteinander kombiniert werden, soweit dies möglich und sinnvoll ist.

Es folgt eine Kurzbeschreibung von Figuren.
Fig. 1 ist eine schematische Perspektivansicht eines Fahrzeuginnenraums mit einem schwenkbaren Bildschirm in einer heruntergeklappten Stellung gemäß einem Ausführungsbeispiel der vorliegenden Erfindung.
Fig. 2 ist eine schematische Perspektivansicht des Fahrzeuginnenraums mit dem Bildschirm in einer hochgeklappten Stellung gemäß dem Ausführungsbeispiel der vorliegenden Erfindung.
Fig. 3 ist eine schematische Perspektivansicht aus einer Perspektive eines Fondinsassen mit dem Bildschirm in der heruntergeklappten Stellung gemäß dem Ausführungsbeispiel der vorliegenden Erfindung.
Fig. 4 ist eine schematische Perspektivansicht aus der Perspektive des Fondinsassen mit dem Bildschirm in der heruntergeklappten Stellung gemäß dem Ausführungsbeispiel der vorliegenden Erfindung.
Fig. 5 ist eine schematische Seitenansicht des Bildschirms gemäß dem Ausführungsbeispiel der vorliegenden Erfindung, wobei der Bildschirm in verschiedenen Schwenkstellungen dargestellt ist.

Es folgt eine detaillierte Beschreibung eines Ausführungsbeispiels der vorliegenden Erfindung unter Bezugnahme auf die Figuren.

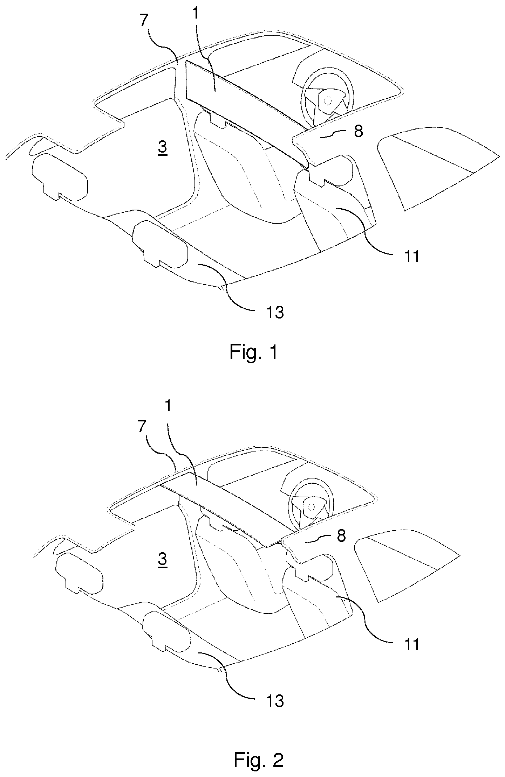

In Fig. 1 ist ein Personenkraftfahrzeug mit einem Fahrzeuginnenraum 3 in einer geschnittenen Ansicht mit einer Perspektive von schräg hinten oben dargestellt. Das Personenkraftfahrzeug hat eine vordere Sitzreihe 11 mit einem Fahrersitz und einem Beifahrersitz sowie einen Fond mit einer hinteren Sitzreihe 13 in Form einer Rücksitzbank 13 mit zwei oder drei Sitzplätzen. An einem linken Dachseitenrahmen 7 und einem rechten Dachseitenrahmen 8 ist ein Bildschirm 1 schwenkbar gelagert. Der Bildschirm 1 erstreckt sich im Wesentlichen über eine gesamte Breite einer Fahrzeugdachinnenseite 5 zwischen dem linken Dachseitenrahmen 7 und dem rechten Dachseitenrahmen 8. Der Bildschirm 1 ist dabei einstückig ausgeführt, d.h. er erstreckt sich ungeteilt über seine gesamte Breite und ist nicht aus mehreren Bildschirmteilen zusammengesetzt. Der Bildschirm 1 kann in eine

Hauptbetriebsstellung (Hauptwiedergabestellung) verschwenkt werden, in der der Bildschirm 1 im Wesentlichen in vertikaler Richtung ausgerichtet ist und eine auf der Rücksitzbank 13 sitzende Personen, d.h. ein Fahrzeugfondinsasse, Inhalte auf einer Vorderseite des Bildschirms 1, d.h. einer dem Fahrzeugfondinsassen zugewandten Seite des Bildschirms 1, sehen können. Ferner ist der Bildschirm 1 in eine Dachstellung verschwenkbar, in der der Bildschirm 1 im Wesentlichen parallel zu einer Fahrzeugdachinnenseite 5 geschwenkt ist, wobei die Vorderseite des Bildschirms 1 dem Fahrzeuginnenraum 3 d.h. ebenfalls dem Fahrzeugfondinsassen zugewandt ist. In Figur 1 ist der Bildschirm 1 in der heruntergeklappten Stellung, d.h. der erwähnten Hauptbetriebsstellung, dargestellt.

In Figur 2 ist das Personenkraftfahrzeug mit dem Fahrzeuginnenraum 3 in einer geschnittenen Ansicht mit einer Perspektive von schräg hinten oben dargestellt, wobei der Bildschirm 1 sich in einer hochgeklappten Stellung, d.h. der vorstehend erwähnten Dachstellung, befindet.

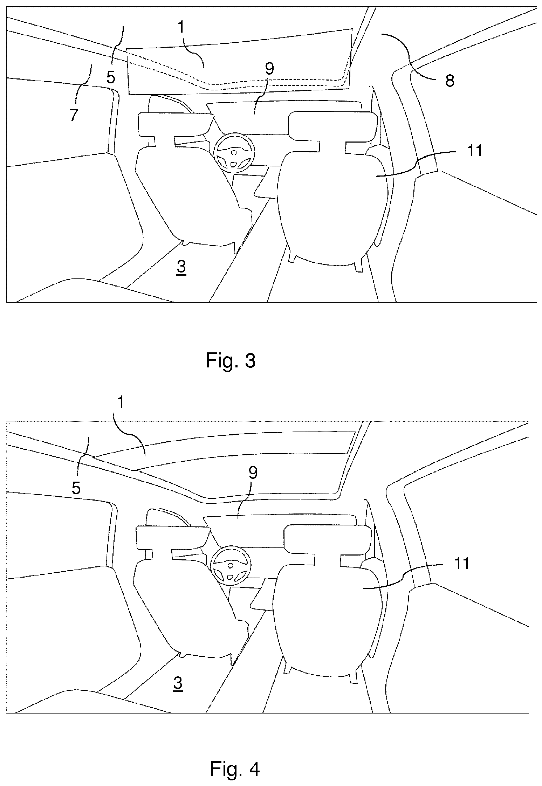

Fig. 3 zeigt den Fahrzeuginnenraum 3 mit dem Bildschirm 1 in seiner Hauptbetriebsstellung ungefähr aus einer Perspektive des Fahrzeugfondinsassen, d.h. des Fahrzeuginsassen, der auf der Rücksitzbank 13 sitzt. Ein Blickfeld des Fahrzeugfondinsassen auf der Rücksitzbank 13 ist im Wesentlichen nach vorne gerichtet, wobei er ggf. beeinträchtigt durch Vordersitze der vorderen Sitzreihe 11 bzw. vordere Fahrzeuginsassen auch einen Blick auf die Frontscheibe 9 hat. Aus der Perspektive des Fahrzeugfondinsassen fluchtet eine untere Kante 2 des Bildschirms 1 ungefähr mit einem oberen Ende 10 der Frontscheibe 9, sodass der Bildschirm 1 ein Sichtfeld des Fahrzeugfondinsassen auf die Frontscheibe 9 nicht behindert. Gegebenenfalls ist dies durch weiteres Verschwenken des Bildschirms 1 oder durch eine längsverschiebliche Lagerung, d.h. eine Verschiebbarkeit in Fahrzeuglängsrichtung, die im Fahrzeugkoordinatensystem auch als X-Richtung bezeichnet wird, des Bildschirms 1 einstellbar. In Fig. 3 sind durch eine gestrichelte Linie Teile der Fahrzeugdachinnenseite gezeigt, die durch den Bildschirm verdeckt sind.

Figur 4 zeigt die gleiche Perspektive wie Figur 3, wobei der Bildschirm 1 sich in der Dachstellung befindet.

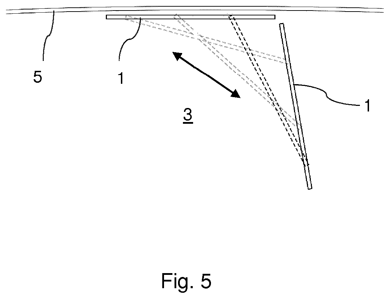

Der Bildschirm 1 ist an dem linken Dachseitenrahmen 7 und dem rechten Dachseitenrahmen 8 mittels eines nicht gezeigten, jedoch an sich bekannten Mehrgelenkmechanismus, insbesondere eines Viergelenkmechanismus, schwenkbar gelagert. In Fig. 5 ist eine entsprechende Schwenkbewegung des Bildschirms 1 in einer Seitenansicht gezeigt. Durch den Mehrgelenkmechanismus ist der Bildschirm 1 um eine virtuelle Schwenkachse bzw. in einer virtuellen Schwenkbahn derart verschwenkbar, dass der Bildschirm 1 während der Schwenkbewegung nicht mit dem Fahrzeugfondinsassen kollidiert.

Wie in Figuren 1 bis 4, insbesondere in Fig. 3, zu erkennen ist, hat der Bildschirm 1 im Verhältnis zu seiner Breite eine verhältnismäßig geringe Höhe, wobei sich seine Höhe in etwa in einem Bereich von 100 bis 300 mm je nach Fahrzeugbart bzw. Fahrzeuginnenraumgestaltung bewegt. Durch die verhältnismäßig geringe Höhe des Bildschirms 1 ist die vorstehend beschriebene Sicht des Fahrzeugfondinsassen auf die Frontscheibe 9 nicht eingeschränkt. Ferner schränkt der Bildschirm 1 hierdurch einem Raum im Fahrzeugfond verhältnismäßig wenig ein. Hinsichtlich einer Breite erstreckt sich der Bildschirm 1 zumindest von einer Mitte des Fahrersitzes bis zu einer Mitte des Beifahrersitzes. Je nach Fahrzeugbauart kann dabei der Bildschirm eine Breite von wenigsten 500 mm oder wenigsten 600 mm oder wenigsten 700 mm oder wenigstens 800 mm oder wenigstens 900 mm oder wenigstens 1000 mm haben. Eine Maximale Breite ist durch eine Breite der Fahrzeugdachinnenseite vorgegeben. In dem in den Figuren gezeigtem Ausführungsbeispiel hat der Bildschirm nahezu diese maximale Breite.

Auf dem Bildschirm 1 sind beliebige Informationsinhalte als auch Unterhaltungsinhalte darstellbar. Die darstellbaren Inhalte können dabei völlig fahrzeugunabhängig sein, z.B. Fernsehen, Internetinhalte oder Filme, oder sich auch auf den momentanen Fahrzeugzustand bzw. das Fahrzeug beziehen. Es können Karteninhalte, Navigationsinhalte, Umgebungsinformationen, z.B. touristische Informationen, Wetterinformationen dargestellt werden. Ebenso kann der Bildschirm interaktiv ausgebildet sein, so dass über den Bildschirm 1 mittels eines Eingabegeräts Eingaben/Steuerungen möglich sind. Der Bildschirm 1 ist auch für Bildtelefonie verwendbar. Ferner kann der Bildschirm 1 dafür verwendet werden, Bilder von Kameras des Fahrzeugs zu übertragen, beispielsweise einer Kamera, die in Fahrzeugfahrrichtung gerichtet ist. Der Bildschirm 1 ist weist ferner einen Modus auf, in dem nebeneinander auf der Rücksitzbank 11 sitzenden Fahrzeugfondinsassen unterschiedliche Inhalte auf einer linken Hälfte bzw. einer rechten Hälfte des Bildschirms 1 angezeigt werden können.

Der Bildschirm 1 ist ferner derart ausgebildet, dass er auch in seiner Dachstellung Inhalte darstellen kann. Bei den Inhalten, den der Fahrzeugfondinsasse in der Dachstellung betrachten kann, kann es sich ebenso um Informations- oder Unterhaltungsinhalte handeln, es kann sich dabei auch lediglich um grafische Inhalte handeln, die einen Erscheinungsbild des Fahrzeuginnenraums verändern bzw. verbessern. In der Dachstellung ist der Bildschirm 1 auch lediglich als Lichtquelle mit frei wählbaren Lichtfarben und in der Beleuchtungsstärke dimmbar nutzbar. Es könnte dabei auch eine sogenannte ambiente Animation dargestellt werden, wodurch in dem Fahrzeuginnenraum eine gewünschte Innenraumstimmung erzeugbar ist.

## Patentansprüche

1. Personenkraftfahrzeug mit einem eigensteifen Bildschirm (1), der in einem Fahrzeuginnenraum (3) im Bereich einer Fahrzeugdachinnenseite (5) angeordnet und befestigt ist, wobei der Bildschirm (1) sich durchgängig über zumindest eine Hälfte der Breite, bevorzugt zumindest zwei Drittel der Breite, insbesondere im Wesentlichen eine gesamte Breite, der Fahrzeugdachinnenseite (5) erstreckt, wobei eine Vorderseite des Bildschirms (1) in einer Betriebsstellung einem davor sitzenden Fahrzeuginsassen zugewandt ist, wobei der Bildschirm (1) über einen Eingelenkmechanismus oder einen Mehrgelenkmechanismus um eine reelle oder virtuelle, ortsfeste oder ortsveränderliche Schwenkachse, die in eine Fahrzeugquerrichtung verläuft, schwenkbar gelagert ist, wobei der Bildschirm (1) in eine Dachstellung, in der der Bildschirm (1) im Wesentlichen parallel zu der Fahrzeugdachinnenseite positioniert ist, schwenkbar ist, wobei die Vorderseite des Bildschirms (1) in der Dachstellung dem Fahrzeuginnenraum zugewandt ist, und wobei der Bildschirm (1) eine maximale Höhe von 400 mm aufweist.

2. Kraftfahrzeug nach Patentanspruch 1, wobei der Bildschirm (1) bevorzugt eine maximale Höhe von 300mm aufweist und insbesondere eine minimale Höhe von 100 mm, bevorzugt 150 mm, aufweist.

3. Kraftfahrzeug nach Patentanspruch 1 oder 2, wobei der Bildschirm (1) eine Breite von mindestens 500 mm, bevorzugt von mindestens 800 mm, beispielsweise mindestens 1000 mm, aufweist.

4. Kraftfahrzeug nach einem der Patentansprüche 1 bis 3, wobei der Bildschirm (1) derartig positionierbar ist, dass in einem Blickfeld eines vor dem Bildschirm (1) sitzenden Fahrzeuginsassen eine Unterkannte des Bildschirms (1) in etwa mit einem oberen Ende einer Frontscheibe (9) fluchtet.

5. Kraftfahrzeug nach einem der Patentansprüche 1 bis 4, wobei der Bildschirm (1) gekrümmt ausgebildet ist und wobei die Krümmung des Bildschirms (1) in der Dachstellung im Wesentlichen einer Krümmung der Fahrzeugdachinnenseite (5) entspricht.

6. Kraftfahrzeug nach einem der Patentansprüche 1 bis 5, wobei der Bildschirm (1) in Fahrzeuglängsrichtung (x-Richtung) verschiebbar gelagert ist.

7. Kraftfahrzeug nach einem der Patentansprüche 1 bis 6, wobei der Bildschirm (1) an einem linken Dachseitenrahmen (7) und an einem rechten Dachseitenrahmen (8) befestigt und gelagert ist.

8. Kraftfahrzeug nach einem der Patentansprüche 1 bis 7, wobei der Bildschirm (1) transparent ausgebildet ist.

9. Kraftfahrzeug nach einem der Patentansprüche 1 bis 8, wobei der Bildschirm mittels organischen Leuchtdioden (OLED) ausgebildet ist.

## Claims

1. Motor vehicle with a self-supporting screen (1) that is arranged and fastened in a vehicle interior (3) in the area of a vehicle roof inner side (5), wherein the screen (1) extends continuously over at least one half of the width, preferably at least two thirds of the width, in particular substantially an entire width, of the vehicle roof inner side (5), wherein a front side of the screen (1) in an operating position faces a vehicle occupant sitting in front of it, wherein the screen (1) is pivotably mounted via a single-joint mechanism or a multi-joint mechanism about a real or virtual, stationary or movable pivot axis that runs in a vehicle transverse direction, wherein the screen (1) can be pivoted into a roof position in which the screen (1) is positioned substantially parallel to the vehicle roof inner side, wherein the front side of the screen (1) in the roof position faces the vehicle interior, and wherein the screen (1) has a maximum height of 400 mm.

2. Motor vehicle according to patent claim 1, wherein the screen (1) preferably has a maximum height of 300 mm and in particular has a minimum height of 100 mm, preferably 150 mm.

3. Motor vehicle according to patent claim 1 or 2, wherein the screen (1) has a width of at least 500 mm, preferably of at least 800 mm, for example at least 1000 mm.

4. Motor vehicle according to any one of patent claims 1 to 3, wherein the screen (1) can be positioned in such a way that, in a field of view of a vehicle occupant sitting in front of the screen (1), a lower edge of the screen (1) approximately aligns with an upper end of a windshield (9).

5. Motor vehicle according to any one of patent claims 1 to 4, wherein the screen (1) is curved and wherein the curvature of the screen (1) in the roof position substantially corresponds to a curvature of the vehicle roof inner side (5).

6. Motor vehicle according to any one of patent claims 1 to 5, wherein the screen (1) is mounted so as to be displaceable in the vehicle longitudinal direction (x-direction).

7. Motor vehicle according to any one of patent claims 1 to 6, wherein the screen (1) is fastened and mounted to a left roof side frame (7) and to a right roof side frame (8).

8. Motor vehicle according to any one of patent claims 1 to 7, wherein the screen (1) is designed to be transparent.

9. Motor vehicle according to any one of patent claims 1 to 8, wherein the screen is designed using organic light-emitting diodes (OLED).

## Revendications

1. Véhicule automobile avec un écran autoportant (1) qui est disposé et fixé dans un habitacle de véhicule (3) dans la zone d'une face intérieure de toit de véhicule (5), l'écran (1) s'étendant de manière continue sur au moins la moitié de la largeur, de préférence au moins deux tiers de la largeur, en particulier sensiblement toute la largeur, de la face intérieure de toit de véhicule (5), une face avant de l'écran (1) dans une position de fonctionnement étant tournée vers un occupant du véhicule assis devant, l'écran (1) étant monté de manière pivotante par un mécanisme à articulation unique ou un mécanisme à articulations multiples autour d'un axe de pivotement réel ou virtuel, fixe ou mobile, qui s'étend dans une direction transversale du véhicule, l'écran (1) pouvant pivoter dans une position de toit dans laquelle l'écran (1) est positionné sensiblement parallèlement à la face intérieure de toit de véhicule, la face avant de l'écran (1) dans la position de toit étant tournée vers l'habitacle du véhicule, et l'écran (1) ayant une hauteur maximale de 400 mm.

2. Véhicule automobile selon la revendication 1, dans lequel l'écran (1) a de préférence une hauteur maximale de 300 mm et en particulier une hauteur minimale de 100 mm, de préférence 150 mm.

3. Véhicule automobile selon la revendication 1 ou 2, dans lequel l'écran (1) a une largeur d'au moins 500 mm, de préférence d'au moins 800 mm, par exemple d'au moins 1000 mm.

4. Véhicule automobile selon l'une quelconque des revendications 1 à 3, dans lequel l'écran (1) peut être positionné de telle sorte que, dans un champ de vision d'un occupant du véhicule assis devant l'écran (1), un bord inférieur de l'écran (1) s'aligne approximativement avec une extrémité supérieure d'un pare-brise (9).

5. Véhicule automobile selon l'une quelconque des revendications 1 à 4, dans lequel l'écran (1) est incurvé et dans lequel la courbure de l'écran (1) dans la position de toit correspond sensiblement à une courbure de la face intérieure de toit de véhicule (5).

6. Véhicule automobile selon l'une quelconque des revendications 1 à 5, dans lequel l'écran (1) est monté de manière à être déplaçable dans la direction longitudinale du véhicule (direction x).

7. Véhicule automobile selon l'une quelconque des revendications 1 à 6, dans lequel l'écran (1) est fixé et monté sur un cadre latéral de toit gauche (7) et sur un cadre latéral de toit droit (8).

8. Véhicule automobile selon l'une quelconque des revendications 1 à 7, dans lequel l'écran (1) est conçu pour être transparent.

9. Véhicule automobile selon l'une quelconque des revendications 1 à 8, dans lequel l'écran est conçu en utilisant des diodes électroluminescentes organiques (OLED).
